# EUROPÄISCHE PATENTSCHRIFT

(11) **EP 3 331 738 B1**
(45) Veröffentlichungstag und Bekanntmachung des Hinweises auf die Patenterteilung: **26.02.2020**
(21) Anmeldenummer: 16750426.5
(22) Anmeldetag: 02.08.2016
(51) Int. Cl.: B60T 17/02, F04B 49/02, F04B 25/00, F04D 27/02

(54) **VORRICHTUNG UND VERFAHREN ZUR DRUCKLUFTVERSORGUNG**
DEVICE AND METHOD FOR COMPRESSED AIR SUPPLY
DISPOSITIF ET PROCÉDÉ D'ALIMENTATION EN AIR COMPRIMÉ

(30) Priorität: 05.08.2015 DE 102015112827
(43) Veröffentlichungstag der Anmeldung: 13.06.2018
(73) Patentinhaber: KNORR-BREMSE Systeme für Schienenfahrzeuge GmbH, 80809 München (DE)
(72) Erfinder: MÜLLER, Claus, 82515 Wolfratshausen (DE); KIPP, Thomas, 81547 München (DE); ASSMANN, Gert, 80337 München (DE)
(86) Internationale Anmeldenummer: PCT/EP2016/068416
(87) Internationale Veröffentlichungsnummer: WO 2017/021403

(56) Entgegenhaltungen:
- US-A- 2 690 292
- US-A1- 2012 164 017
- US-A1- 2013 280 095
- US-B1- 6 203 285
- US-B2- 6 638 029

## Beschreibung

Druckluftversorgung insbesondere für ein Schienenfahrzeug mit einem Kompressor, der eine erste Verdichtereinrichtung und eine mit dieser über eine Verbindungsleitung verbundene zweite Verdichtereinrichtung aufweist. Bei Schienenfahrzeugen werden Einrichtungen zur Druckluftversorgung, insbesondere zur Versorgung des Bremssystems der Schienenfahrzeuge mit Druckluft eingesetzt. Für Hilfsaggregate, wie beispielsweise Panthographen werden häufig kleinere

Hilfsluftkompressoren eingesetzt, welche zur Bereitstellung von Hilfsdruckluft für z. B. für den Stellantrieb von Pantographen oder dergleichen durch die Fahrzeugbatterie des Schienenfahrzeugs mit elektrischer Energie versorgt wird. Die elektrische Energie der Fahrzeugbatterie ist ausreichend, um den relativ klein dimensionierten
Hilfsluftkompressor elektromotorisch anzutreiben, so dass genügend Druckluft zur Hilfsluftversorgung erzeugbar ist. Nachteilig an solchen Einrichtungen zur
Hilfsluftversorgung ist allerdings der recht hohe gerätetechnische Aufwand sowie der erforderliche Wartungsaufwand.

In der WO 2015/028532 wird eine Druckluftversorgungsvorrichtung mit einem Hauptkompressor vorgeschlagen, bei welchem die Drucklufterzeugungsmittel zur Hilfsluftversorgung einen elektrischen Frequenzumrichter aufweisen, zum Betreiben des elektromotorisch angetriebenen Hauptkompressors des Schienenfahrzeuges mit niedriger Drehzahl aus von der Fahrzeugbatterie bereitgestellter elektrischer Antriebsenergie.

Im Patentdokument US 2013/0280095 A1 sind ein System und ein Verfahren zum kontrollierten Wiederholen eines Kompressorstarts offenbart.

Im Patentdokument US 2,690,292 ist ein Verfahren zum Steuern eines Luftflusses in einem Kompressorsystem offenbart.

Patentdokument US 6,203,285 B1 bezieht sich auf Luftkompressoren, die in Lokomotiven verwendet werden, und insbesondere auf eine pneumatische und elektrische Schaltungsanordnung, die ein schnelles Entladen einer Ladeluftkühlereinheit gestattet, die pneumatisch zwischen Niederdruckköpfen und einem Hochdruckkopf eines Kompressors angeschlossen ist.

Patentdokument US 2012/0164017 A1 bezieht sich auf einen mehrstufiger öl-freien Schraubenverdichter, der enthält: ein Saugdrosselventil zum Steuern des Lufteinlasses in den Kompressor; eine Kolbenanordnung zum Betätigen der Ansaugdrosselklappe; und eine Struktur zum Zuführen eines Arbeitsdrucks zu der Kolbenanordnung.

Patentdokument US 2003/0113214 A1 bezieht sich auf einen zweistufigen, öl-freien Kompressor mit einem Druckmodulationsmechanismus.

Beim Einsatz einer solchen Vorrichtung zur Druckluftversorgung tritt allerdings der Zielkonflikt auf, dass eine geringe Auffüllzeit gefordert wird, die einen Kompressor mit großer Lieferleistung erfordert. Allerdings ist ein Betrieb mit Batteriestrom nur dann einfach realisierbar, wenn die elektrische Leistungsaufnahme des Kompressors und damit auch die Lieferleistung gering ist.

Die Vorrichtung weist einen so genannten zweistufigen Kompressor mit einer ersten Verdichtereinrichtung auf, der unter Umgebungsdruck stehende Luft zuführbar ist. Diese wird in der ersten Verdichtereinrichtung mithilfe eines sich in der anschließenden Verbindungsleitung aufbauenden Gegendrucks verdichtet. Auf diese Weise wird in der ersten Verdichtereinrichtung Druckluft erzeugt. Der erste Druck entspricht dabei dem sich nach der ersten Verdichtereinrichtung einstellenden Druck.

Die im Anspruch und im Rahmen der Beschreibung genannte "unter Umgebungsdruck stehende Luft" kann eine gegenüber dem tatsächlichen Umgebungsdruck insbesondere aufgrund von strömungsmechanischen Einflüssen innerhalb der Vorrichtung geringe Druckabweichungen aufweisen, welche jedoch keinen Einfluss auf die Funktionsweise der Vorrichtung aufweisen und daher in der folgenden Beschreibung nicht näher berücksichtigt werden.

Kann sich nach der ersten Verdichtereinrichtung kein oder kein für die Funktionsweise der Vorrichtung wesentlicher Gegendruck aufbauen, so findet in der ersten Verdichtereinrichtung keine oder keine für die Funktionsweise der Vorrichtung wesentliche Verdichtung statt, so dass die Luft nach einer Förderung durch die Verdichtereinrichtung weiterhin - im Rahmen der vorausgehenden Anmerkung - unter Umgebungsdruck steht.

Diese unter dem ersten Druck stehende Luft (im Normalbetrieb mit gegenüber dem Umgebungsdruck erhöhten Druck und im Hilfsluftbetrieb mit Umgebungsdruck), welche vorher die erste Verdichtereinrichtung durchlaufen hat, wird durch die Verbindungsleitung der zweiten Verdichtereinrichtung zugeführt. In der zweiten Verdichtereinrichtung findet eine (im Normalbetrieb weitere) Verdichtung auf einen zweiten Druck statt, der höher als der erste Druck ist.

Erfindungsgemäß ist die Verbindungsleitung mit einer Schalteinrichtung wirkverbunden, mit welcher die Vorrichtung zwischen Normalbetrieb und Hilfsluftbetrieb geschaltet werden kann. Dabei weist die Schalteinrichtung eine geeignete Einrichtung wie beispielsweise ein Absperrventil auf, mittels welchem die Verbindungsleitung mit unter Umgebungsdruck stehender Luft verbindbar ist. Dadurch findet ein Druckausgleich statt, aufgrund dessen sich in der Verbindungsleitung kein (Gegen-)Druck aufbauen kann. Folglich wird im Hilfsluftbetrieb die der ersten Verdichtereinrichtung zugeführte Luft ohne planmäßigen Druckaufbau durch die erste Verdichtereinrichtung gefördert, wodurch die erste Verdichtereinrichtung nur eine entsprechend geringe Leistungsaufnahme aufweist.

Vorteilhaft an der beschriebenen Lösung ist, dass der Kompressor der erfindungsgemäßen Druckluftversorgung mit geringem Aufwand an elektrotechnischen Mitteln einsetzbar ist. Aufgrund der Möglichkeit, einen Kompressor mit großer Lieferleistung einzusetzen, ist eine kurze Auffüllzeit darstellbar. Zur Umschaltung zwischen den Betriebszuständen Normalbetrieb und Hilfsluftbetrieb sind nur wenige Komponenten erforderlich. Ferner ist der Kompressor im Hilfsluftbetrieb mit nur geringer elektrischer Leistungsaufnahme betreibbar.

Bei einer Weiterentwicklung der Vorrichtung zur Druckversorgung ist der zweiten Verdichtereinrichtung im Hilfsluftbetrieb unter Umgebungsdruck stehende Luft zuführbar. Die zuführbare Luft kann dabei zumindest teilweise von der ersten Verdichtereinrichtung zur zweiten Verdichtereinrichtung strömen oder wenigstens teilweise unter Umgehung der ersten Verdichtereinrichtung aus der Luftzuführung zur ersten Verdichtereinrichtung abgeleitet sein.

Bei einer Weiterentwicklung der Vorrichtung zur Druckversorgung weist die Schalteinrichtung ein Absperrventil auf, über welches im Hilfsluftbetrieb die Verbindungsleitung mit der Luftzuführleitung zur ersten Verdichtereinrichtung verbindbar ist. Bei dieser Ausführungsform kann ein Druckausgleich innerhalb eines Luftsystems erfolgen, in welches nur an einer Stelle frische Luft nachströmt, welche zu Druckluft verdichtet wird. Möglicherweise erforderliche Filter- und/ oder andere Aufbereitungseinrichtungen für die einströmende Luft sind auf diese Weise nur an einer Stelle der Vorrichtung erforderlich, ferner wird die bereits aufbereitete Luft nachfolgend auch zu Druckluft verdichtet.

Bei einer anderen Weiterentwicklung der Vorrichtung zur Druckluftversorgung weist die Schalteinrichtung eine Schließeinrichtung und eine Rückflusssperre auf, über welche im Hilfsluftbetrieb wenigstens ein Teil der von der ersten Verdichtereinrichtung geförderten Luft aus der Verbindungsleitung beispielsweise ins Freie ableitbar ist. Die Rückflusssperre verhindert dabei, dass Luft von außen durch die Schalteinrichtung in die Verbindungsleitung angesaugt und dann in die zweite Verdichtereinrichtung strömt. Bedingt durch die Funktionsweise der Rückflusssperre kann dabei erforderlich sein, dass der erste Druck in der Verbindungsleitung vor der Rückflusssperre etwas höher ist als der Umgebungsdruck. Eine solche Rückflusssperre kann beispielsweise durch ein Rückschlagventil dargestellt sein. Dabei ist ein gegenüber dem Umgebungsdruck erhöhter Druck erforderlich, um das Rückschlagventil zu öffnen und so einen Druckausgleich zu ermöglichen. Ebenso kann eine solche Rückflusssperre auch durch eine Düse (z. B. Drosselventil) dargestellt sein, vor welcher sich ein Druck aufbaut, welcher ein Ansaugen von Luft durch die Düse in die Verbindungsleitung und in die zweite Verdichtereinrichtung verhindert.

Bei einer Weiterentwicklung der Vorrichtung zur Druckversorgung ist vor der ersten Verdichtereinrichtung ein Luftfilter angeordnet, welchen die der ersten Verdichtereinrichtung zugeführte Luft durchströmt. Der Luftfilter verhindert die Zuführung von Verunreinigungen mit der Luft in den Kompressor und in die weiteren an der Luftversorgung angeordneten Aggregate. Ferner können vor oder nach der ersten Verdichtereinrichtung weitere Einrichtungen zur Aufbereitung der verwendeten Luft angeordnet sein, wie beispielsweise Kühleinrichtungen oder Lufttrocknungseinrichtungen.

Bei einer Weiterentwicklung der Vorrichtung zur Druckversorgung ist in der Verbindungsleitung zwischen der ersten Verdichtereinrichtung und der zweiten Verdichtereinrichtung ein Zwischenkühler angeordnet. Der Zwischenkühler dient zum Kühlen der beim Verdichten in der ersten Verdichtereinrichtung erwärmten Luft. Dabei sinkt auch der Druck der Druckluft in der Verbindungsleitung. Durch das Vorsehen eines Zwischenkühlers kann folglich auch der Wirkungsgrad der zweiten Verdichtereinrichtung erhöht werden.

Bei einer Weiterentwicklung der Vorrichtung zur Druckversorgung ist eine Nebenleitung an der nach der zweiten Verdichtereinrichtung angeschlossenen Druckluftleitung angeschlossen, welche die Druckluft in einen Vorratsdruckbehälter leitet. Mittels der Nebenleitung kann die Hilfsdruckluft für die Versorgung von wenigstens einem Aggregat wie beispielsweise einem Panthographen vor der Einleitung in den Vorratsbehälter abgeleitet werden.

Die Erfindung betrifft des Weiteren ein Verfahren zur Druckluftversorgung eines Schienenfahrzeugs aufweisend eine Vorrichtung mit einem Kompressor, der eine erste Verdichtereinrichtung und eine mit dieser über eine Verbindungsleitung verbundene zweite Verdichtereinrichtung aufweist, wobei das Verfahren im Normalbetrieb folgende Schritte aufweist:
- Zuführen von unter Umgebungsdruck stehender Luft zur ersten Verdichtereinrichtung;
- Erzeugen von unter einem ersten Druck stehender Druckluft in der ersten Verdichtereinrichtung;
- Zuführen der unter dem ersten Druck stehenden Druckluft zur zweiten Verdichtereinrichtung;
- Erzeugen von unter einem zweiten Druck stehender Druckluft in der zweiten Verdichtereinrichtung.
Die Vorrichtung ist durch Schalten einer Schalteinrichtung vom Normalbetrieb in einen Hilfsluftbetrieb schaltbar, der folgende Schritte aufweist:
- Zuführen von unter Umgebungsdruck stehender Luft zur ersten Verdichtereinrichtung;
- Fördern von unter Umgebungsdruck stehender Luft durch die erste Verdichtereinrichtung;
- Ausgleichen des Drucks der durch die erste Verdichtereinrichtung geförderten Luft mit Umgebungsdruck;
- Zuführen eines Teils der durch die erste Verdichtereinrichtung geförderten Luft zur zweiten Verdichtereinrichtung;
- Erzeugen von unter einem zweiten Druck stehender Druckluft in der zweiten Verdichtereinrichtung.

Das Verfahren ist mit einer Vorrichtung der oben beschriebenen Art durchführbar.

Auch im Zusammenhang mit dem erfindungsgemäßen Verfahren kann "unter Umgebungsdruck stehende Luft" eine gegenüber dem tatsächlichen Umgebungsdruck aufgrund von strömungsmechanischen Einflüssen innerhalb der Vorrichtung geringe Druckabweichung aufweisen, welche jedoch keinen Einfluss auf die Durchführung des Verfahrens aufweist und daher in der Beschreibung auch nicht berücksichtigt wird.

Vorzugsweise wird das Verfahren so durchgeführt, dass im Hilfsluftbetrieb in der ersten Verdichtereinrichtung keine bzw. für die Durchführung des Verfahrens keine wesentliche Verdichtung erfolgt, wobei eine geringfügige Verdichtung durch strömungsmechanische Einwirkungen auf die durchströmende Luft möglich ist.

Weitere Vorteile, Merkmale und Anwendungsmöglichkeiten der vorliegenden Erfindung ergeben sich aus der nachfolgenden Beschreibung unter Bezugnahme auf die beigefügten Figuren. Es zeigt:
- Fig. 1:: eine schematische Darstellung einer Vorrichtung zur Druckluftversorgung gemäß dem Stand der Technik;
- Fig. 2:: eine schematische Darstellung einer beispielhaften erfindungsgemäßen Vorrichtung zur Druckluftversorgung gemäß einem ersten Ausführungsbeispiel; und
- Fig. 3:: eine schematische Darstellung einer weiteren beispielhaften erfindungsgemäßen Vorrichtung zur Druckluftversorgung gemäß einem zweiten Ausführungsbeispiel.

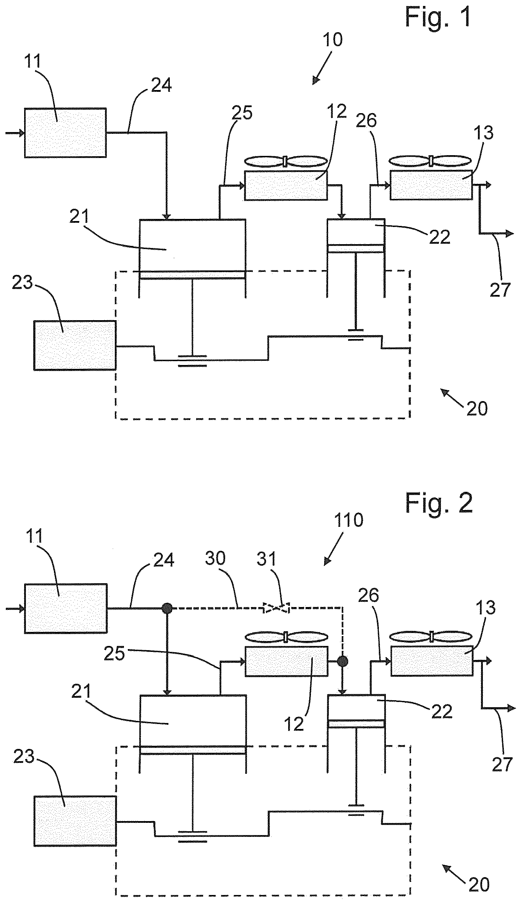

Fig. 1 zeigt eine schematische Darstellung einer Vorrichtung 10 zur Druckluftversorgung gemäß dem Stand der Technik. Zur Erzeugung von Druckluft wird bei diesem Beispiel ein zweistufiger Kolbenkompressor 20 eingesetzt, welcher von einem E-Motor 23 angetrieben wird. Der Kompressor 20 weist eine erste Verdichtereinrichtung 21 und eine zweite Verdichtereinrichtung 22 auf. Bei dieser beispielhaften Vorrichtung 10 zur Druckluftversorgung wird Umgebungsluft durch einen Luftfilter 11 angesaugt und über eine Luftzuführleitung 24 der ersten Verdichtereinrichtung 21 zugeführt. Bei der folgenden Durchströmung der ersten Verdichtereinrichtung 21 wird Druckluft erzeugt, welche unter einem ersten Druck steht. Der erste Druck der Druckluft beträgt bei dieser Vorrichtung 10 etwa 3,3 bar (absolut).

Die unter dem ersten Druck stehende Druckluft wird über eine Verbindungsleitung 25 in die zweite Verdichtereinrichtung 22 geführt. An der Verbindungsleitung 25 ist eine Zwischenkühleinrichtung 12 angeordnet, welche die Druckluft in der Verbindungsleitung 25 kühlt. Bei der Strömung der Druckluft durch die zweiten Verdichtereinrichtung 22 wird diese in dieser beispielhaften Vorrichtung 10 auf einen zweiten Druck von etwa 11 bar (absolut) verdichtet. Die unter dem zweiten Druck von etwa 11 bar stehende Druckluft wird anschließend durch eine Druckluftleitung 26 einem in den Figuren nicht dargestellten Vorratsdruckbehälter zugeführt. An der Druckluftleitung 26 ist eine Nachkühleinrichtung 13 angeordnet, welche die Druckluft in der Druckluftleitung 26 kühlt. An der Druckluftleitung 26 ist ferner eine Nebenleitung 27 angeschlossen, mittels welcher die Hilfsdruckluft für die Versorgung von Hilfsaggregaten wie Aktuatoren von Panthographen und dergleichen, für welche Hilfsdruckluft erforderlich ist, vor der Einleitung in den Vorratsbehälter abgeleitet werden kann. Nachteilig bei dieser beispielhaften - dem Stand der Technik entsprechenden - Vorrichtung ist, dass auch im Falle einer ausschließlichen Versorgung der Hilfsluftaggregate in beiden Verdichtereinrichtungen 21, 22 eine Verdichtung der Luft erfolgt. Dadurch weist diese Vorrichtung immer ein entsprechend hohe Förderleistung und eine entsprechend hohe elektrische Energieaufnahme auf.

**Fig. 2** zeigt eine schematische Darstellung einer beispielhaften erfindungsgemäßen Vorrichtung 110 zur Druckluftversorgung gemäß einem ersten Ausführungsbeispiel. Die Einrichtungen und Merkmale der beispielhaften erfindungsgemäßen Vorrichtung 110, welche mit der Vorrichtung 10 des Stands der Technik übereinstimmen, sind mit den selben Bezugszeichen bezeichnet. Hinsichtlich ihrer Eigenschaften wird Bezug auf die Beschreibung der Vorrichtung 10 zur Fig. 1 genommen.

Die Vorrichtung 110 weist gegenüber der Vorrichtung 10 eine Ausgleichsleitung 30 auf, welche eine Schalteinrichtung 31 aufweist. Die Ausgleichsleitung 30 ist mit ihrem einen Ende an der Luftzuführleitung 24 zur ersten Verdichtereinrichtung 21 angeschlossen und ist mit ihrem anderen Ende an der Verbindungsleitung 25 angeschlossen, welche unter dem ersten Druck stehende Druckluft zur zweiten Verdichtereinrichtung 22 führt. Mittels der Schalteinrichtung 31 kann die Ausgleichsleitung 30 und damit die Verbindung zwischen der Luftzuführleitung 24 und der Verbindungsleitung 25 geöffnet und geschlossen werden, um die Vorrichtung 110 zwischen Normalbetrieb und Hilfsluftbetrieb zu schalten.

Im Normalbetrieb ist die Schalteinrichtung 31 und damit die Ausgleichsleitung 30 geschlossen. In der Verbindungsleitung 25 baut sich ein erster Druck von ca. 3,3 bar auf. Eine Verdichtung findet sowohl in der ersten als auch in der zweiten Verdichtereinrichtung 21, 22 statt. Dabei wird die dem Normalbetrieb entsprechend große Lieferleistung bei entsprechend großer elektrischer Leistungsaufnahme bereitgestellt.

Im Hilfsluftbetrieb ist die Schalteinrichtung 31 und damit die Ausgleichsleitung 30 geöffnet. Es findet ein Druckausgleich zwischen der Luftzuführleitung 24 und der Verbindungsleitung 25 statt, so dass sich in der Verbindungsleitung 25 kein gegenüber dem Druck in der Luftzuführleitung 24, der etwa dem Umgebungsdruck entspricht, erhöhter Druck aufbauen kann. In der ersten Verdichtereinrichtung 21 findet keine Verdichtung statt, die Leistungsaufnahme sinkt. Aufgrund des fehlenden Überdrucks in der Verbindungsleitung 25 ist der Volumenstrom der Luft in die zweite Verdichtereinrichtung 22 stark reduziert. Die Lieferleistung und die elektrische Leistungsaufnahme der Vorrichtung 110 sinken deutlich gegenüber dem Normalbetrieb.

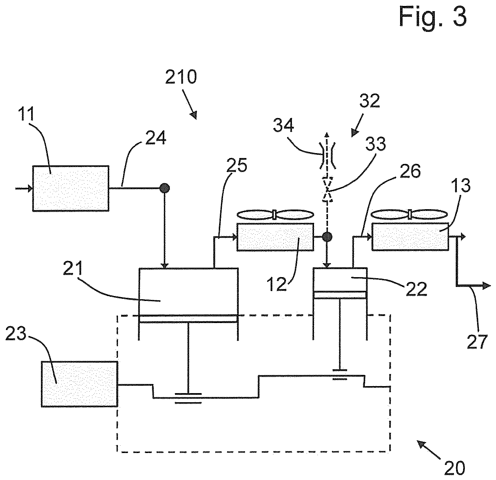

**Fig. 3** zeigt eine schematische Darstellung einer weiteren beispielhaften erfindungsgemäßen Vorrichtung 210 zur Druckluftversorgung gemäß einem zweiten Ausführungsbeispiel. Die Einrichtungen und Merkmale der beispielhaften erfindungsgemäßen Vor-richtung 210, welche mit der Vorrichtung 10 des Stands der Technik übereinstimmen, ist mit den selben Bezugszeichen bezeichnet. Hinsichtlich ihrer Eigenschaften wird Bezug auf die Beschreibung der Vorrichtung 10 zur Fig. 1 genommen.

Die Verbindungsleitung 25 der Vorrichtung 210 weist gegenüber der Vorrichtung 10 einen Anschluss auf, der mit einer Schalteinrichtung 32 verbunden ist. Die Schalteinrichtung 32 weist eine Schließeinrichtung 33 mit einer Rückflusssperre 34 in Form eines Drosselventils auf, das zur Umgebung hin geöffnet ist. Die Entlüftungsöffnung der Rückflusssperre 34 weist einen definierten Öffnungsquerschnitt auf, der zur Umgebung hin geöffnet ist. Alternativ könnte die Rückflusssperre 34 beispielsweise auch von einem Rückschlagventil gebildet werden.

Im Normalbetrieb ist die Schalteinrichtung 32 geschlossen. In der Verbindungsleitung 25 baut sich ein erster Druck von ca. 3,3 bar auf. Eine Verdichtung erfolgt sowohl in der ersten als auch in der zweiten Verdichtereinrichtung 21, 22. Dabei wird die dem Normalbetrieb entsprechend große Lieferleistung bei entsprechend großer elektrischer Leistungsaufnahme bereitgestellt.

Im Hilfsluftbetrieb ist die Schalteinrichtung 32 und damit die Rückflusssperre 34 geöffnet. Es findet ein Druckausgleich zwischen der Umgebung und der Verbindungsleitung 25 statt, so dass sich in der Verbindungsleitung 25 nur aufgrund des Strömungswiderstands der Rückflusssperre 34 ein geringer Überdruck aufbauen kann. Ein Ansaugen von Umgebungsluft durch die Rückflusssperre 34 wird so verhindert. In der ersten Verdichtereinrichtung 21 findet nahezu keine Verdichtung statt, die Leistungsaufnahme sinkt. Der Volumenstrom der Luft in die zweite Verdichtereinrichtung 22 ist gegenüber dem Normalbetrieb stark reduziert. Damit sinken die Lieferleistung und die elektrische Leistungsaufnahme der Vorrichtung 210 deutlich gegenüber dem Normalbetrieb.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### BEZUGSZEICHENLISTE

- 10: Vorrichtung (zur Drucklufterzeugung)
- 11: Luftfilter
- 12: Zwischenkühleinrichtung
- 13: Nachkühleinrichtung
- 20: Kolbenkompressor
- 21: erste Verdichtereinrichtung
- 22: zweite Verdichtereinrichtung
- 23: E-Motor
- 24: Luftzuführleitung
- 25: Verbindungsleitung
- 26: Druckluftleitung
- 27: Nebenleitung
- 30: Ausgleichsleitung
- 31: Schalteinrichtung
- 32: Schalteinrichtung
- 33: Schließeinrichtung
- 34: Rückflusssperre
- 110: Vorrichtung (zur Drucklufterzeugung)
- 210: Vorrichtung (zur Drucklufterzeugung)

## Patentansprüche

1. Vorrichtung zur Druckluftversorgung, insbesondere für ein Schienenfahrzeug, die in einem Normalbetrieb und einem Hilfsluftbetrieb betreibbar ist, aufweisend einen Kompressor (20), der eine erste Verdichtereinrichtung (21) aufweist, welcher unter Umgebungsdruck stehende Luft zuführbar ist und mittels welcher unter einem ersten Druck stehende Druckluft erzeugbar ist, und eine zweite Verdichtereinrichtung (22) aufweist, mittels welcher unter einem zweiten Druck stehende Druckluft erzeugbar ist, wobei die unter dem ersten Druck stehende Druckluft durch eine Verbindungsleitung (25) von der ersten Verdichtereinrichtung (21) zur zweiten Verdichtereinrichtung (22) führbar ist,
wobei die Verbindungsleitung (25) mit einer Schalteinrichtung (31, 32) wirkverbunden ist, mittels welcher die Verbindungsleitung (25) mit unter Umgebungsdruck stehender Luft verbindbar ist, so dass im Hilfsluftbetrieb in der Verbindungsleitung (25) ein Druckausgleich mit unter Umgebungsdruck stehender Luft erfolgt,
**dadurch gekennzeichnet, dass** die Schalteinrichtung (32) eine Schließeinrichtung (33) und eine Rückflusssperre (34) aufweist, über welche wenigstens ein Teil der von der ersten Verdichtereinrichtung (21) geförderten Luft ableitbar ist, wobei die Rückflussperre (34) als Rückschlagventil oder als Düse ausgeführt ist,
und der erste Druck vor der Rückflusssperre (34) höher ist als der Umgebungsdruck.

2. Vorrichtung nach Anspruch 1, **dadurch gekennzeichnet, dass** der zweiten Verdichtereinrichtung (22) im Hilfsluftbetrieb unter Umgebungsdruck stehende Luft zuführbar ist.

3. Vorrichtung nach einem der vorhergehenden Ansprüche, **dadurch gekennzeichnet, dass** vor der ersten Verdichtereinrichtung (21) ein Luftfilter (11) angeordnet ist, welchen die der ersten Verdichtereinrichtung (21) zugeführte Luft durchströmt.

4. Vorrichtung nach einem der vorhergehenden Ansprüche, **dadurch gekennzeichnet, dass** in der Verbindungsleitung zwischen der ersten Verdichtereinrichtung (21) und der zweiten Verdichtereinrichtung (22) ein Zwischenkühler (12) angeordnet ist.

5. Vorrichtung nach einem der vorhergehenden Ansprüche, **dadurch gekennzeichnet, dass** eine Nebenleitung (27) mit der nach der zweiten Verdichtereinrichtung (22) angeschlossenen Druckluftleitung (26) verbunden ist, um hiervon die Druckluft für die Versorgung wenigstens eines Aggregats abzuzweigen.

6. Verfahren zur Druckluftversorgung für ein Schienenfahrzeug unter Verwendung einer Vorrichtung gemäß Anspruch 1, wobei das Verfahren im Normalbetrieb folgende Schritte aufweist:
- Zuführen von unter Umgebungsdruck stehender Luft zur ersten Verdichtereinrichtung (21);
- Erzeugen von unter einem ersten Druck stehender Druckluft in der ersten Verdichtereinrichtung (21);
- Zuführen der unter dem ersten Druck stehenden Druckluft zur zweiten Verdichtereinrichtung (22);
- Erzeugen von unter einem zweiten Druck stehender Druckluft in der zweiten Verdichtereinrichtung (22);
**dadurch gekennzeichnet, dass** die Vorrichtung durch Schalten einer Schalteinrichtung (31, 32) vom Normalbetrieb in einen Hilfsluftbetrieb schaltbar ist, der folgende Schritte aufweist:
- Zuführen von unter Umgebungsdruck stehender Luft zur ersten Verdichtereinrichtung (21);
- Fördern von unter Umgebungsdruck stehender Luft durch die erste Verdichtereinrichtung (21);
Ermöglichen eines Druckausgleichs der durch die erste Verdichtereinrichtung (21) geförderten Luft mit Umgebungsdruck durch eine Schalteinrichtung (32), die eine Schließeinrichtung (33) und eine Rückflusssperre (34) aufweist, über welche wenigstens ein Teil der von der ersten Verdichtereinrichtung (21) geförderten Luft abgeleitet wird wobei die Rückflussperre (34) als Rückschlagventil oder als Düse ausgeführt ist, und der erste Druck vor der Rückflusssperre (34) höher ist als der Umgebungsdruck;
- Zuführen eines Teils der durch die erste Verdichtereinrichtung (21) geförderten Luft zur zweiten Verdichtereinrichtung (22);
- Erzeugen von unter einem zweiten Druck stehender Druckluft in der zweiten Verdichtereinrichtung (22).

7. Verfahren nach Anspruch 6, **dadurch gekennzeichnet, dass** im Hilfsluftbetrieb beim Fördern von unter Umgebungsdruck stehender Luft durch die erste Verdichtereinrichtung (21) keine Verdichtung der Luft erfolgt.

## Claims

1. Device for compressed air supply, in particular for a rail vehicle, which device can be operated in a normal mode and in an auxiliary air mode, having a compressor (20) which has a first compressor device (21), to which air under ambient pressure can be supplied and by means of which compressed air under a first pressure can be generated, and a second compressor device (22), by means of which compressed air under a second pressure can be generated, wherein the compressed air under the first pressure can be guided by a connecting line (25) from the first compressor device (21) to the second compressor device (22), wherein the connecting line (25) is operatively connected to a switching device (31, 32), by means of which the connecting line (25) is connectable to air under ambient pressure, so that in the auxiliary air mode pressure is equalised with air under ambient pressure in the connecting line (25),
**characterised in that** the switching device (32) has a closing device (33) and a return flow barrier (34), via which at least some of the air conveyed from the first compressor device (21) can be conducted away, the return flow barrier (34) being designed as a check valve or as a nozzle and the first pressure upstream of the return flow barrier (34) being higher than ambient pressure

2. Device according to claim 1, **characterised in that** air under ambient pressure can be fed to the second compressor device (22) in the auxiliary air mode.

3. Device according to any of the preceding claims, **characterised in that** an air filter (11) through which the air supplied to the first compressor device (21) flows is arranged upstream of the first compressor device (21).

4. Device according to any of the preceding claims, **characterised in that** an intercooler (12) is arranged in the connecting line between the first compressor device (21) and the second compressor device (22).

5. Device according to any of the preceding claims, **characterised in that** a secondary line (27) is connected to the compressed air line (26) connected downstream of the second compressor device (22), in order to branch off the compressed air from said compressed air line for supplying at least one unit.

6. Method for the compressed air supply for a rail vehicle, using a device according to claim 1, the method comprising the following steps in the normal mode:
- supplying air under ambient pressure to the first compressor device (21);
- generating compressed air under a first pressure in the first compressor device (21);
- supplying the compressed air under the first pressure to the second compressor device (22);
- generating compressed is under a second pressure in the second compressor device (22);
**characterised in that** the device can be switched by switching a switching device (31, 32) from the normal mode into an auxiliary air mode which comprises the following steps:
- supplying air under ambient pressure to the first compressor device (21);
- conveying air under ambient pressure through the first compressor device (21);
- enabling the pressure of the air conveyed through the first compressor device (21) to be equalised with ambient pressure by means of a switching device (31, 32) having a closing device (33) and a return flow barrier (34), via which at least some of the air conveyed from the first compressor device (21) can be conducted away, the return flow barrier (34) being designed as a check valve or as a nozzle and the first pressure upstream of the return flow barrier (34) being higher than ambient pressure;
- supplying some of the air conveyed through the first compressor device (21) to the second compressor device (22);
- generating compressed air under a second pressure in the second compressor device (22).

7. Method according to claim 6, **characterised in that** in the auxiliary air mode, during the conveying of air under ambient pressure through the first compressor device (21), no compression of the air takes place.

## Revendications

1. Installation d'alimentation en air comprimé, notamment d'un véhicule ferroviaire, qui peut fonctionner suivant un fonctionnement normal et suivant un fonctionnement en air auxiliaire, comportant un compresseur (20), qui a un premier dispositif (21) de compression, auquel peut être envoyé de l'air sous la pression atmosphérique, et au moyen duquel de l'air comprimé sous une première pression peut être produit, et un deuxième dispositif (22) de compression, au moyen duquel de l'air comprimé sous une deuxième pression peut être produit, l'air comprimé sous la première pression pouvant être envoyé par un conduit (25) de liaison du premier dispositif (21) de compression au deuxième dispositif (22) de compression,
dans lequel le conduit (25) de liaison est en liaison d'action avec un dispositif (31, 32) de commutation, au moyen duquel le conduit (25) de liaison peut être mis en liaison avec de l'air sous la pression atmosphérique, de sorte que, en fonctionnement en air auxiliaire, il se produise, dans le conduit (25) de liaison, une compensation de pression avec de l'air sous la pression atmosphérique, **caractérisée en ce que** le dispositif (32) de commutation a un dispositif (33) de fermeture et un dispositif (34) antireflux, par lesquels au moins une partie de l'air refoulé par le premier dispositif (21) de compression peut être évacuée, le dispositif (34) antireflux étant réalisé sous la forme d'un clapet antiretour ou d'une buse,
et la première pression avant le dispositif (34) antireflux est plus haute que la pression atmosphérique.

2. Installation suivant la revendication 1, **caractérisée en ce que** de l'air sous la pression atmosphérique peut, en fonctionnement en air auxiliaire, être envoyé au deuxième dispositif (22) de compression.

3. Installation suivant l'une des revendications précédentes, **caractérisée en ce qu'**avant le premier dispositif (21) de compression, est monté un filtre (11) à air, que traverse l'air envoyé au premier dispositif (21) de compression.

4. Installation suivant l'une des revendications précédentes, **caractérisée en ce qu'**un refroidisseur (12) intermédiaire est monté dans le conduit de liaison entre le premier dispositif (21) de compression et le deuxième dispositif (22) de compression.

5. Installation suivant l'une des revendications précédentes, **caractérisée en ce qu'**un conduit (27) auxiliaire est relié au conduit (26) d'air comprimé raccordé après le deuxième dispositif (22) de compression, afin d'en dériver l'air comprimé pour l'alimentation d'au moins un groupe.

6. Procédé d'alimentation en air comprimé d'un véhicule ferroviaire, en utilisant une installation suivant la revendication 1, dans lequel le procédé a, en fonctionnement normal, les stades suivants :
- envoi d'air sous la pression atmosphérique au premier dispositif (21) de compression ;
- production d'air comprimé sous une première pression dans le premier dispositif (21) de compression ;
- envoi de l'air comprimé sous la première pression au deuxième dispositif (22) de compression ;
- production d'air comprimé sous une deuxième pression au deuxième dispositif (22) de compression ;
**caractérisé en ce que** l'installation peut, par commutation d'un dispositif (31, 32) de commutation, être commutée d'un fonctionnement normal à un fonctionnement en air auxiliaire, qui a les stades suivants :
- envoi d'air sous la pression atmosphérique au premier dispositif (21) de compression ;
- refoulement d'air sous la pression atmosphérique par le premier dispositif (21) de compression,
en permettant une compensation de pression de l'air refoulé par le premier dispositif (21) de compression avec la pression atmosphérique, par un dispositif (32) de commutation, qui a un dispositif (33) de fermeture et un dispositif (34) antireflux, par lequel au moins une partie de l'air refoulé par le premier dispositif (21) de compression est dérivée, le dispositif (34) antireflux étant réalisé sous la forme d'un clapet antiretour ou d'une buse, et la première pression avant le dispositif (34) antireflux étant plus haute que la pression atmosphérique ;
- envoi d'une partie de l'air refoulé par le premier dispositif (21) de compression au deuxième dispositif (22) de compression ;
- production d'air comprimé sous une deuxième pression dans le deuxième dispositif (22) de compression.

7. Procédé suivant la revendication 5, **caractérisé en ce que**, dans le fonctionnement en air auxiliaire, lorsque de l'air sous la pression atmosphérique est refoulé par le premier dispositif (21) de compression, il ne se produit pas de compression de l'air.
